(19) 

Europäisches
Patentamt
European
Patent Office
Office européen
des brevets

(11) **EP 4 449 856 A1**

(12) **EUROPEAN PATENT APPLICATION**
published in accordance with Art. 153(4) EPC

(43) Date of publication:
**23.10.2024 Bulletin 2024/43**

(21) Application number: **22909820.7**

(22) Date of filing: **13.12.2022**

(51) International Patent Classification (IPC):
**A01G 9/14** (2006.01)          **A01G 9/24** (2006.01)
**A01G 9/26** (2006.01)          **A01G 7/04** (2006.01)

(52) Cooperative Patent Classification (CPC):
**A01G 7/04; A01G 9/14; A01G 9/24; A01G 9/26;**
Y02A 40/25; Y02P 60/12

(86) International application number:
**PCT/CN2022/138622**

(87) International publication number:
**WO 2023/116506 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.12.2021 CN 202111564718**

(71) Applicant: **University of Science and Technology
of China**
**Hefei, Anhui 230026 (CN)**

(72) Inventors:
• **CHEN, Fangcai**
**Hefei, Anhui 230026 (CN)**

• **LIU, Wen**
**Hefei, Anhui 230026 (CN)**
• **ZHANG, Xinyu**
**Hefei, Anhui 230026 (CN)**
• **LI, Ming**
**Hefei, Anhui 230026 (CN)**
• **ZHENG, Jianan**
**Hefei, Anhui 230026 (CN)**
• **FAN, Liulu**
**Hefei, Anhui 230026 (CN)**

(74) Representative: **Gleim Petri Patent- und
Rechtsanwaltspartnerschaft mbB**
**Neugasse 13**
**07743 Jena (DE)**

(54) **INTELLIGENT PHOTOVOLTAIC GLASS GREENHOUSE, OPERATION METHOD THEREFOR,
AND APPLICATION THEREOF**

(57)     An intelligent photovoltaic glass greenhouse, an operation method therefor, and an application thereof. The intelligent photovoltaic glass greenhouse comprises a plurality of groups of greenhouse units arranged in parallel in the north-south direction, roof frames of the plurality of groups of greenhouse units form a W shape, glass side walls are arranged around a main frame of the greenhouse and not at the joints of the adjacent greenhouse units, photovoltaic panels and I-shaped light homogenizing plates which are periodically mounted are provided on the south-facing roof frames in the east-west direction, a group of I-shaped light homogenizing plates is arranged between every two groups of photovoltaic panels to form a period, and II-shaped light homogenizing plates are laid throughout the north-facing roof frames.

FIG. 2

## Description

### TECHNICAL FIELD

The present disclosure belongs to the technical field of glass greenhouses, and in particular, to an intelligent photovoltaic glass greenhouse, an operation method therefor, and an application thereof.

### BACKGROUND

Under the background of global fossil resource depletion and climate warming, solar energy has become an important renewable energy source. From 2011 to 2020, the cumulative photovoltaic installed capacity in China has increased from 3 GW to 252.5 GW. With the introduction of the concept of "carbon peak and carbon neutrality", the photovoltaic industry will surely undertake an important mission. The introduction of the concept of "photovoltaic industry + agriculture" has effectively solved the problem of land competition between "photovoltaic industry" and "agriculture", that is, both agricultural production and photovoltaic power generation are carried out on the same land, which is an important direction for the development and application of the photovoltaic industry.

The core technology of "photovoltaic agriculture" is to solve the problem of land competition between "photovoltaic industry" and "agriculture". At present, the main scheme of the photovoltaic agriculture at home and abroad only uses geometric beam splitting, that is, photovoltaic cells are arranged in a certain cover ratio, so that some plants under photovoltaic panels can receive some sunlight in different time periods, but this scheme will result in uneven illumination in agriculture and lead to uneven growth of crops in essence. On the other hand, in sunny spring, summer and autumn, from 11: 00 am to 2: 00 pm, the light intensity of glass greenhouses in central and eastern China exceeds the light saturation point of crops, and most greenhouse plants are forced to enter the state of a noon break. Installing photovoltaic panels on the farmland will essentially weaken the average light intensity on the farmland below the photovoltaic panels. Therefore, when the light intensity is appropriately weakened, the increase of crop yield and income can be promoted.

A Venlo greenhouse is widely used in the Netherlands because of its high light transmittance, strong moisturizing ability and high degree of automation, and the Netherlands is relying on its advanced Venlo glass greenhouse system to become a second largest exporter of agricultural products in the world. However, such Venlo glass greenhouse is not suitable in China because most places in China have high temperatures and sufficient sunlight in summer, which makes the light intensity and temperature inside the Venlo glass greenhouse too high and inhibits the photosynthesis of crops. Therefore, proper cooling treatment of the Venlo glass greenhouse will be of great help to its popularization in China. Installing solar photovoltaic panels in the Venlo glass greenhouse not only can play a shading role to improve the yield of crops, but also can generate a certain amount of electricity to directly supply energy for the operation of the Venlo glass greenhouse, thus achieving the effect of energy saving and emission reduction.

Both Chinese utility model patents with the publication numbers of CN209218747U and CN213306498U put forward the structural design of the photovoltaic glass greenhouse, but they only focus on improving the power generation efficiency of photovoltaic panels, which still cannot solve the problem of uneven distribution of sunlight in the photovoltaic glass greenhouse and ensure the growth of plants in the glass greenhouse.

Based on the above contents, the present disclosure provides an intelligent photovoltaic glass greenhouse, an operation method therefor, and an application thereof to solve the above problems.

### SUMMARY

The purpose of the present disclosure is to provide an intelligent photovoltaic glass greenhouse with a simple structure and a reasonable design, as well as an operation method therefor, and an application thereof.

The present disclosure achieves the above object through the following technical scheme.

An intelligent photovoltaic glass greenhouse includes multiple groups of greenhouse units arranged in parallel in a north-south direction, where each of the greenhouse units includes a main frame, equilateral obtuse roof frames, photovoltaic panels, first light homogenizing plates, second light homogenizing plates and glass side walls, the equilateral obtuse roof frames are fixed on the main frame, the roof frames of the multiple groups of greenhouse units form a structure of a W shape, the glass side walls are provided around the main frame and not at joints of adjacent greenhouse units, multiple groups of the photovoltaic panels and the first light homogenizing plates are provided in turn in an east-west direction on south-facing roof frames of the roof frames, a group of first light homogenizing plates is arranged between every two groups of photovoltaic panels to form a group of the multiple groups of the photovoltaic panels and the first light homogenizing plates, and the second light homogenizing plates are laid throughout north-facing roof frames of the roof frames.

As a further optimization scheme of the present disclosure, waterproof sealing layers are provided between adjacent second light homogenizing plates and between the first light homogenizing plate and the photovoltaic panel.

As a further optimization scheme of the present disclosure, the first light homogenizing plates and the second light homogenizing plates are made of glass with high transmittance, light-receiving surfaces of the first light homogenizing plates and light-receiving surfaces of the second light homogenizing plates are smooth planes, and light-transmitting surfaces of the first light homogenizing plates and light-transmitting surfaces of the second light homogenizing plates are fine Fresnel lens structures.

As a further optimization scheme of the present disclosure, the fine Fresnel lens structures of the light-transmitting surfaces of the first light homogenizing plates consist of trapezoidal convex structures arranged in turn, and are configured for homogenizing incident light toward east and west directions of the greenhouse.

As a further optimization scheme of the present disclosure, the trapezoidal convex structure of the light-transmitting surface of the first light homogenizing plate includes a hypotenuse angle, an upper bottom and a lower bottom, where a width of the upper bottom is half of a width of the lower bottom, and specific expression formula of the hypotenuse angle and the width of the upper bottom of a structural unit of the first light homogenizing plate are:

$$\alpha_1 = \frac{n_0 * \cos\left(\tan^{-1}\frac{2*H}{k_1*L_1}\right)}{\sqrt{n_1^2 - 2*n_1*n_0*\sin\left(\tan^{-1}\frac{2*h_1}{k_1*L_1}\right) + n_0^2}}$$

$$a = \frac{h_1}{\tan(\alpha_1)} * \frac{1}{2*k_1}$$

where $\alpha_1$ is the hypotenuse angle of the structural unit of the light-transmitting surface of the first light homogenizing plate, $a$ is the width of the upper bottom of the trapezoid of the structural unit of the light-transmitting surface of the I-shaped light homogenizing plate, $n_1$ is a refractive index of the first light homogenizing plate, $n_0$ is a refractive index of air, $L_1$ is a width of the first light homogenizing plate, $H$ is a mounting height of the first light homogenizing plate, $h_1$ is a groove depth of the structural unit of the light-transmitting surface of the first light homogenizing plate, and $k_1$ is an area ratio of the first light homogenizing plate to the photovoltaic panel.

As a further optimization scheme of the present disclosure, a number of the trapezoidal convex structures of the first light homogenizing plate is $N_1$, and specific expression formula of $N_1$ is:

$$N_1 = \frac{L_1}{\left(\frac{2*h_1}{\tan(\alpha_1)} + 2*a\right)}$$

where $\alpha_1$ is the hypotenuse angle of the structural unit of the light-transmitting surface of the first light homogenizing plate, $a$ is the width of the upper bottom of the trapezoid of the structural unit of the light-transmitting surface of the I-shaped light homogenizing plate, $L_1$ is the width of the first light homogenizing plate, $h_1$ is the groove depth of the structural unit of the light-transmitting surface of the first light homogenizing plate.

As a further optimization scheme of the present disclosure, the fine Fresnel lens structures of the light-transmitting surfaces of the second light homogenizing plates consist of multiple groups of saw teeth with different sizes arranged in turn, and are configured for homogenizing incident light toward south and north directions of the greenhouse.

As a further optimization scheme of the present disclosure, the saw teeth in the light-transmitting surface of the second light homogenizing plate include a first saw tooth and a second saw tooth, and specific expression formulas of a hypotenuse angle of the first saw tooth and a hypotenuse angle of the second saw tooth are:

$$\theta_2 = \tan^{-1}\frac{H}{L_2*\cos(\theta_0) + \tan(\theta_0)*(H + L_2*\sin(\theta_0))}$$

$$\varphi_2 = \sin^{-1}\left(\frac{n_0*\sin(\theta_0 + \varphi_0)}{n_1}\right)$$

$$\theta_1 = \sin^{-1}\frac{n_0*\cos(\theta_0-\theta_2)-n_1*\sin(\varphi_2)}{\sqrt{n_0{}^2+n_1{}^2-2*n_0*n_1*\sin(\theta_0-\theta_2+\varphi_2)}}$$

$$\theta_2{}' = \tan^{-1}\frac{H}{L_2*\cos(\theta_0)+\frac{1}{2}*tan(\theta_0)*(H+L_2*\sin(\theta_0))}$$

$$\theta_1{}' = \sin^{-1}\frac{n_0*\cos\left(\theta_0-\theta_2{}'\right)-n_1*\sin(\varphi_2)}{\sqrt{n_0{}^2+n_1{}^2-2*n_0*n_1*\sin(\theta_0-\theta_2{}'+\varphi_2)}}$$

where $\theta_0$ is an inclination angle of the second light homogenizing plate with respect to the ground, $\theta_1$ is the hypotenuse angle of the first saw tooth of a structural unit of the light-transmitting surface of the second light homogenizing plate, $\theta_1'$ is the hypotenuse angle of the second saw tooth of the structural unit of the light-transmitting surface of the second light homogenizing plate, $\theta_2$ is a first included angle between the sun rays emitted from the light-transmitting surface of the second light homogenizing plate and the ground, $\theta_2'$ is a second included angle between the sun rays emitted from the light-transmitting surface of the second light homogenizing plate and the ground, $\varphi_0$ is a height angle between the sun rays and the ground, $n_0$ is a refractive index of air, and $n_1$ is a refractive index of the second light homogenizing plate; according to the specific expression formulas of the hypotenuse angle of the first saw tooth and the hypotenuse angle of the second saw tooth, the hypotenuse angle $\theta_1$ of the saw teeth in the light-transmitting surface of the second light homogenizing plate is obtained, where $H$ is a mounting height of the second light homogenizing plate, $L_2$ is a length of the second light homogenizing plate, and a length of the photovoltaic panel is the same as that of the second light homogenizing plate.

As a further optimization scheme of the present disclosure, a number of the multiple groups of the fine Fresnel lens structures of the second light homogenizing plate is $N_2$, and specific expression formula of $N_2$ is:

$$N_2 = \frac{L_2}{1.2*\left(\frac{4}{\sin\left(2\theta_1\right)}+\frac{2}{\sin\left(2\theta_1{}'\right)}\right)*h_2}$$

where $L_2$ is the length of the second light homogenizing plate, $\theta_0$ is the inclination angle of the second light homogenizing plate with respect to the ground, $\theta_1$ is the hypotenuse angle of the first saw tooth of the structural unit of the light-transmitting surface of the second light homogenizing plate, $\theta_1'$ is the hypotenuse angle of the second saw tooth of the structural unit of the light-transmitting surface of the second light homogenizing plate, $h_2$ is a groove depth of the structural unit of the light-transmitting surface of the second light homogenizing plate.

As a further optimization scheme of the present disclosure, a thickness of the first light homogenizing plate is the same as that of the second light homogenizing plate, and is in a range of 1 mm to 3 mm.

As a further optimization scheme of the present disclosure, an LED supplemental lighting lamp and a photosynthetic photon flux density sensor are provided inside the glass greenhouse, a controller is provided on an outer side of one of the glass side walls of the glass greenhouse, an output end of the photovoltaic panel is connected to a power grid through an inverter, an input end of the LED supplemental lighting lamp is connected to an output end of the power grid through a rectifier circuit, the output end of the photovoltaic panel is connected to an input end of the controller, and the input end of the LED supplemental lighting lamp is connected to an output end of the controller and the output end of the photovoltaic panel.

The present disclosure further provides an operation method for the intelligent photovoltaic glass greenhouse, where the operation method includes the following steps:

(1) obtaining a PPFD value by using a photosynthetic photon flux density sensor in the glass greenhouse and transmitting the PPFD value to a controller;

(2) when the PPFD value is higher than a set value, inputting all electricity generated by a photovoltaic panel into a power grid; when the PPFD value is lower than the set value and the electricity generated by the photovoltaic panels is sufficient to drive the LED supplemental lighting lamp, using the electricity generated by the photovoltaic panels directly to drive the LED supplemental lighting lamp; and when the electricity generated by the photovoltaic panels is insufficient to drive the LED supplemental lighting lamp, the controller controls the power grid to drive the LED supplemental lighting lamp.

As a further optimization scheme of the present disclosure, the set value is 200 $\mu$mol/m$^2$s.

The present disclosure further provides an application of the intelligent photovoltaic glass greenhouse in greenhouse for planting in arid, water-deficient and barren areas.

Some embodiments have the following beneficial effects.

The present disclosure provides an intelligent photovoltaic glass greenhouse. By combining the main frame, the photovoltaic panels, the first light homogenizing plates and the second light homogenizing plates of the glass greenhouse, the purpose of photovoltaic power generation and greenhouse planting is achieved, and the ground illumination intensity in the glass greenhouse is ensured to be weakened compared with the outdoor illumination intensity, which is helpful to effectively reduce the evaporation of ground water, beneficial to the photosynthesis of crops at noon, and is suitable for arid, water-deficient and barren areas. By changing the area ratio of the first light homogenizing plate to the photovoltaic panel, the average direct light intensity of the glass greenhouse can be effectively controlled compared with traditional greenhouse, and the range of change is from 60% to 75%, so as to meet the growth of plants with different light requirements. The convenience of the connection of photovoltaic power generation device and power grid is made full use of. The LED supplemental lighting lamp and the light sensor are installed in the glass greenhouse. Under the condition of insufficient sunshine intensity, the photovoltaic power generation is used to supplemental lighting in the glass greenhouse first, and then all the generated electricity will be delivered to the power grid when the sunshine intensity is high. Under the condition of continuous rainy days, the power supply will be reversed from the power grid to supply power to the LED supplemental lighting lamp in the glass greenhouse, so as to realize the intelligent regulation of light in the glass greenhouse and ensure the continuous and efficient plant photosynthesis in the glass greenhouse.

## BRIEF DESCRIPTION OF THE DRAWINGS

FIG. 1 is a structural unit diagram of an intelligent photovoltaic glass greenhouse according to the present disclosure.

FIG. 2 is a schematic diagram of the appearance of an intelligent photovoltaic glass greenhouse according to the present disclosure.

FIG. 3 is a top view of an intelligent photovoltaic glass greenhouse according to the present disclosure.

FIG. 4 is a schematic diagram of the cross section of an unfolded light homogenizing plate of an intelligent photovoltaic glass greenhouse according to the present disclosure.

FIG. 5 is a schematic diagram of the design of a first light homogenizing plate of an intelligent photovoltaic glass greenhouse according to the present disclosure.

FIG. 6 is a schematic diagram of the design of a second light homogenizing plate of an intelligent photovoltaic glass greenhouse according to the present disclosure.

FIG. 7 is a light-receiving simulation diagram of a first light homogenizing plate of an intelligent photovoltaic glass greenhouse according to the present disclosure.

FIG. 8 is a light-receiving simulation diagram of a second light homogenizing plate of an intelligent photovoltaic glass greenhouse according to the present disclosure.

FIG. 9 is a schematic diagram of the mounting of a supplemental lighting lamp of an intelligent photovoltaic glass greenhouse according to the present disclosure.

FIG. 10 is a graph showing the output power variation of a photovoltaic panel of an intelligent photovoltaic glass greenhouse according to the present disclosure throughout the day.

FIG. 11 is a graph showing the PPFD value variation of an intelligent photovoltaic glass greenhouse according to the present disclosure throughout the day.

FIG. 12 is a circuit diagram of an intelligent photovoltaic glass greenhouse according to the present disclosure.

In the figures: 1 main frame; 2 roof frame; 3 photovoltaic panel; 4 first light homogenizing plate; 41 light-receiving surface of a first light homogenizing plate; 42 light-transmitting surface of a first light homogenizing plate; 421 structural unit of a light-transmitting surface of a first light homogenizing plate; 5 second light homogenizing plate; 51 light-receiving surface of a second light homogenizing plate; 52 light-transmitting surface of a second light homogenizing plate; 521 structural unit of the light-transmitting surface of a second light homogenizing plate; 6 glass side wall; 7 LED supplemental lighting lamp; 8 controller; 9 ground.

## DETAILED DESCRIPTION OF THE EMBODIMENTS

The present disclosure will be described in further detail with reference to the attached drawings. It is necessary to point out that the following detailed description is only used to further explain the present disclosure, and cannot be understood as limiting the scope of protection of the present disclosure. Those skilled in the art can make some non-essential improvements and adjustments to the present disclosure according to the above contents of the present disclosure.

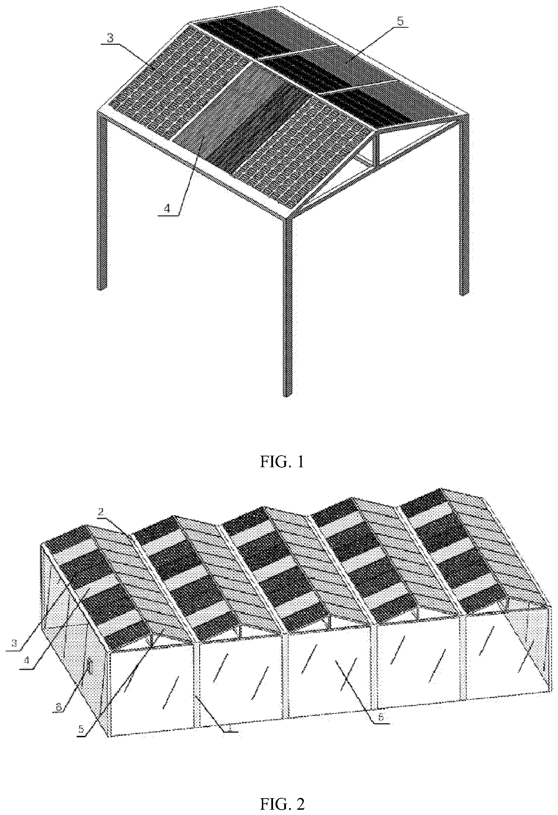

As shown in FIG. 1 to FIG. 3, an intelligent photovoltaic glass greenhouse in the embodiment includes multiple groups of greenhouse units arranged in parallel in the north-south direction. The greenhouse unit includes a main frame 1, roof frames 2, photovoltaic panels 3, first light homogenizing plates 4, second light homogenizing plates 5 and glass side walls 6. The roof frames 2 are equilateral obtuse and fixed on the main frame 1. The roof frames 2 of the multiple groups of greenhouse units form a structure of W shape. The roof frame 2 is built on the main frame 1. The glass side walls 6 are installed around the main frame 1. The photovoltaic panels 3 are installed on the roof frame 2 towards the south. The light-receiving surface 41 of the first light homogenizing plate is installed on the roof frame 2 towards the south and is located between the photovoltaic panels 3. The light-receiving surface 51 of the second light homogenizing plate is installed on the roof frame 2 towards the north. Waterproof sealing layers are provided between the adjacent second light homogenizing plates 5 and between the first light homogenizing plate 4 and the photovoltaic panel 3.

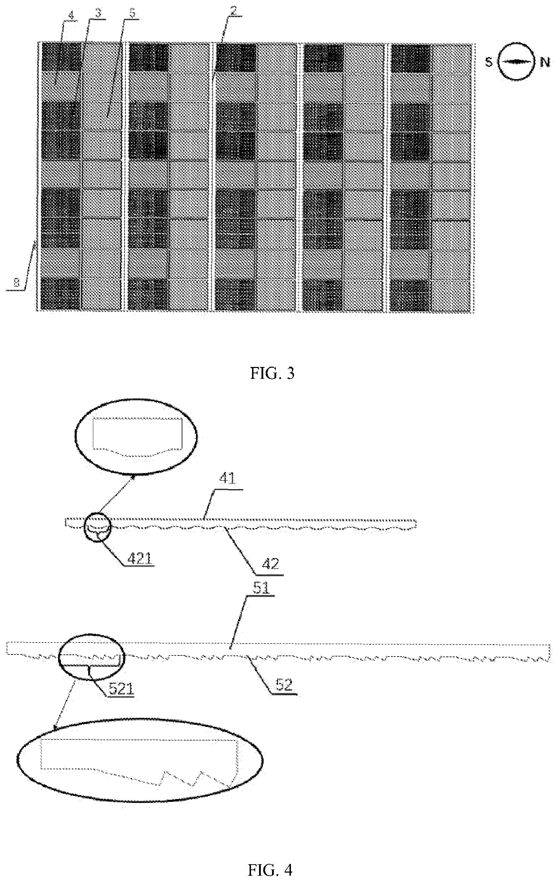

As shown in FIG. 4, the first light homogenizing plates 4 and the second light homogenizing plates 5 are made of glass with high transmittance, light-receiving surfaces 41 of the first light homogenizing plates and light-receiving surfaces 51 of the second light homogenizing plates are smooth planes, and light-transmitting surfaces 42 of the first light homogenizing plates and light-transmitting surfaces 52 of the second light homogenizing plates are fine surface structures similar to Fresnel lenses.

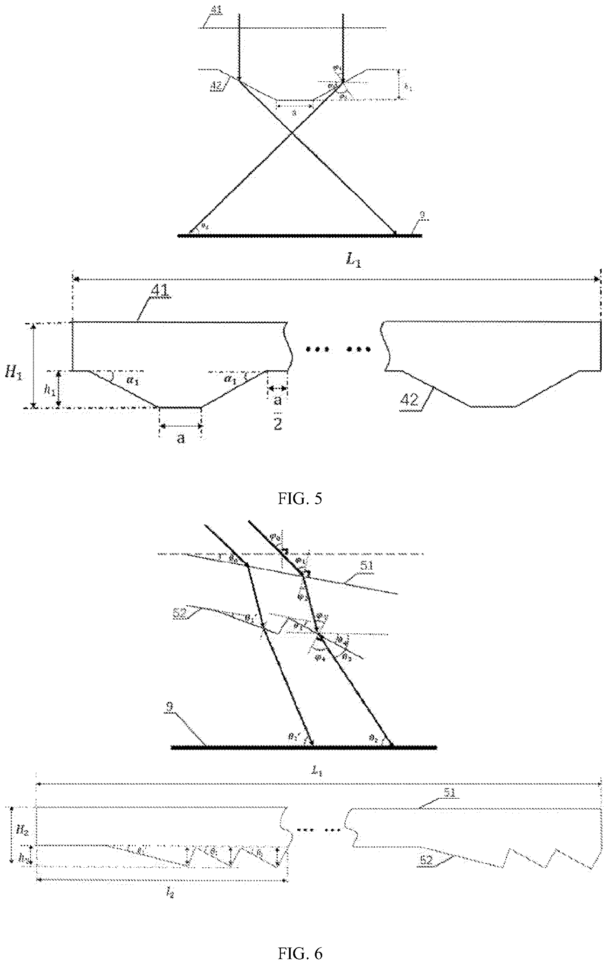

As shown in FIG. 5, the hypotenuse angle and the width of the upper bottom and the width of the lower bottom of the structural unit of the light-transmitting surface 42 of the first light homogenizing plate are related to the area ratio of the photovoltaic panel 3 and the first light homogenizing plate 4, and the mounting height and the angle of the first light homogenizing plate 4. The specific expression formulas of the hypotenuse angle and the width of the upper bottom and the width of the lower bottom of the structural unit 421 of the light-transmitting surface of the first light homogenizing plate are:

$$\alpha_1 = \frac{n_0 * \cos\left(\tan^{-1}\frac{2*H}{k_1*L_1}\right)}{\sqrt{n_1{}^2 - 2*n_1*n_0*\sin\left(\tan^{-1}\frac{2*h_1}{k_1*L_1}\right) + n_0{}^2}}$$

$$a = \frac{h_1}{\tan(\alpha_1)} * \frac{1}{2*k_1}$$

where $\alpha_1$ is a hypotenuse angle of the structural unit 421 of the light-transmitting surface of the first light homogenizing plate, $a$ is a width of the upper bottom and lower bottom of the trapezoid of the structural unit 421 of the light-transmitting surface of the first light homogenizing plate $n_1$ is a refractive index of the first light homogenizing plate 4, $n_0$ is a refractive index of air, $L_1$ is a width of the first light homogenizing plate 4, $H$ is a mounting height of the first light homogenizing plate 4, $h_1$ is a groove depth of the structural unit 421 of the light-transmitting surface of the first light homogenizing plate, and $k_1$ is an area ratio of the photovoltaic panel 3 to the first light homogenizing plate 4.

The number of periods of the structural unit of the light-transmitting surface of the first light homogenizing plate is $N_1$, which depends on the size of a processing device for pressing the first light homogenizing plate and the thickness of the first light homogenizing plate. The specific expression formula of the number of periods of the structural unit 421 of the light-transmitting surface of the first light homogenizing plate is:

$$N_1 = \frac{L_1}{\left(\frac{2*h_1}{\tan(\alpha_1)} + 2*a\right)}$$

where $\alpha_1$ is a hypotenuse angle of the structural unit 421 of the light-transmitting surface of the first light homogenizing plate, $a$ is a width of the upper bottom and lower bottom of the trapezoid of the structural unit 421 of the light-transmitting surface of the first light homogenizing plate, $L_1$ is a width of the first light homogenizing plate 4, $h_1$ is a groove depth of the structural unit 421 of the light-transmitting surface of the first light homogenizing plate.

In this embodiment, when the first light homogenizing plate 4 is made of high-transmittance glass, the refractive index of the high-transmittance glass is 1.51, the refractive index of air is 1, $L_1$ is 1 m, $k_1$ is 2, $h_1$ is 0.5 mm, and H is 3 m to 4 m, it can be found that the value of the hypotenuse angle $\alpha_1$ of the structural unit 421 of the light-transmitting surface of the first light homogenizing plate is 29.4° to 24.2°. The width $a$ of the upper bottom and lower bottom of the trapezoid of the structural unit 421 of the light-transmitting surface of the first light homogenizing plate is 0.44 mm to 0.56 mm. The number $N_1$ of the structural unit 421 of the light-transmitting surface of the first light homogenizing plate is 376 to 300.

As shown in FIG. 6, the hypotenuse angle of the saw tooth of the structural unit 521 of the light-transmitting surface of the second light homogenizing plate is related to the area ratio of the photovoltaic panels 3 and the second light homogenizing plate 5, and is related to the mounting height and angle of the second light homogenizing plate 5. The specific expression formula of the hypotenuse angle of the saw tooth of the structural unit 521 of the light-transmitting surface of the first light homogenizing plate is:

$$\theta_2 = \tan^{-1}\frac{H}{L_2*\cos(\theta_0)+\tan(\theta_0)*(H+L_2*\sin(\theta_0))}$$

$$\varphi_2 = \sin^{-1}\left(\frac{n_0*\sin(\theta_0+\varphi_0)}{n_1}\right)$$

$$\theta_1 = \sin^{-1}\frac{n_0*\cos(\theta_0-\theta_2)-n_1*\sin(\varphi_2)}{\sqrt{n_0^2+n_1^2-2*n_0*n_1*\sin(\theta_0-\theta_2+\varphi_2)}}$$

$$\theta_2{}' = \tan^{-1}\frac{H}{L_2*\cos(\theta_0)+\frac{1}{2}*\tan(\theta_0)*(H+L_2*\sin(\theta_0))}$$

$$\theta_1{}' = \sin^{-1}\frac{n_0*\cos\left(\theta_0-\theta_2{}'\right)-n_1*\sin(\varphi_2)}{\sqrt{n_0^2+n_1^2-2*n_0*n_1*\sin(\theta_0-\theta_2{}'+\varphi_2)}}$$

where $\theta_0$ is an inclination angle of the second light homogenizing plate 5 with respect to the ground 9, $\theta_1$ is a hypotenuse angle of the first saw tooth of the structural unit 521 of the light-transmitting surface of the second light homogenizing plate, $\theta_1{}'$ is a hypotenuse angle of the second saw tooth of the structural unit 521 of the light-transmitting surface of the second light homogenizing plate, $\theta_2$ is a first included angle between the sun rays emitted from the light-transmitting surface 52 of the second light homogenizing plate and the ground 9, $\theta_2{}'$ is a second included angle between the sun rays emitted from the light-transmitting surface 52 of the second light homogenizing plate and the ground 9, $\varphi_0$ is a height angle between the sun rays and the ground 9, $n_0$ is a refractive index of air, and $n_1$ is a refractive index of the second light homogenizing plate 5, $H$ is a mounting height of the second light homogenizing plate 5, $L_2$ is a length of the second light homogenizing plate 5, and the length of the photovoltaic panel 3 is the same as that of the second light homogenizing plate.

The number of the structural units 521 of the light-transmitting surface of the second light homogenizing plate is $N_2$, and the specific expression formula of the number of the structural units 521 of the light-transmitting surface of the second light homogenizing plate is:

$$N_2 = \frac{L_2}{1.2*\left(\frac{4}{\sin\left(2\theta_1\right)}+\frac{2}{\sin\left(2\theta_1{}'\right)}\right)*h_2}$$

where $L_2$ is a length of the second light homogenizing plate 5, $H_2$ is the thickness of the second light homogenizing plate 5, $\theta_1$ and $\theta_1{}'$ are the hypotenuse angles of the saw teeth of the structural unit 521 of the light-transmitting surface of the second light homogenizing plate, $m_2$ is a length ratio of a horizontal side to a hypotenuse of the structural unit 521 of the light-transmitting surface of the second light homogenizing plate, and $t_2$ is the ratio of the groove depth of the structural unit 521 of the light-transmitting surface of the second light homogenizing plate to the thickness of the second light homogenizing plate 5.

where $L_2$ is a length of the second light homogenizing plate 5, $\theta_0$ is an inclination angle of the second light homogenizing plate 5 with respect to the ground 9, $\theta_1$ is a hypotenuse angle of the first saw tooth of the structural unit 521 of the light-transmitting surface of the second light homogenizing plate, $\theta_1'$ is a hypotenuse angle of the second saw tooth of the structural unit 521 of the light-transmitting surface of the second light homogenizing plate, $h_2$ is a groove depth of the structural unit 521 of the light-transmitting surface of the second light homogenizing plate.

Most of the land in China lies between 20° and 40° at north latitude, and the solar altitude angle varies greatly in different regions. When $\varphi_0$ is 70°, $\theta_0$ is 20°, $L_2$ is 1.6 m, $n_0$ is 1, $n_1$ is 1.51, $h_2$ and $H$ are 3 m to 4 m, it can be found that the hypotenuse angle $\theta_1$ of the first saw tooth of the structural unit 521 of the light-transmitting surface of the second light homogenizing plate is 34.1° to 30.8°, and the angle $\theta_1'$ of the second saw tooth hypotenuse of the structural unit 521 of the light-transmitting surface of the second light homogenizing plate is 26.0° to 23.8°. The number $N_2$ of the structural units 521 of the light-transmitting surface of the second light homogenizing plate is 320 to 299.

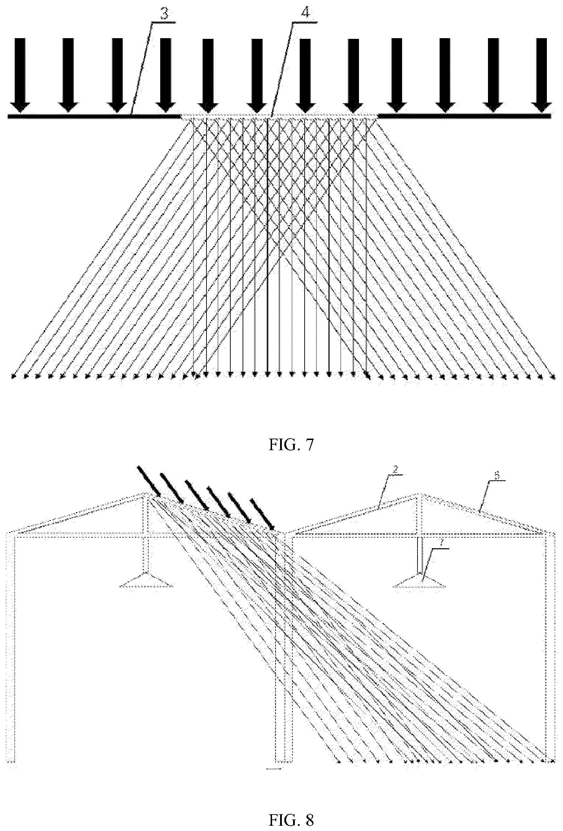

As shown in FIG. 7 to FIG. 8, the light-transmitting surface 42 of the first light homogenizing plate and the light-transmitting surface 52 of the second light homogenizing plate are both of periodic saw tooth array structure, which not only can achieve the light homogenizing effect, but also reduce the thickness and the production difficulty of the light homogenizing plate. The function of the first light homogenizing plate 4 is to homogenize the incident light toward the east and west directions, and the function of the second light homogenizing plate 5 is to homogenize the incident light toward the south and north directions. The area ratio of the photovoltaic panel 3 to the first light homogenizing plate 4 is 2:1, thereby changing the average direct light intensity of the direct light illumination in the glass greenhouse. The average direct light intensity in the glass greenhouse is 60% of the average direct light intensity in the traditional greenhouse. Power generation can be realized, while a part of illumination in the glass greenhouse can be reduced and uniform illumination can be realized, which is more conducive to crop growth and is helpful to effectively reducing surface water evaporation, saving water resources, and improving agricultural arability in arid, water-deficient and barren areas.

As shown in FIG. 7, the first light homogenizing plate 4 is installed between two photovoltaic panels 3. When light is directly incident on the light homogenizing plate 4 and the photovoltaic panel 3, the light incident on the photovoltaic panel 3 will be blocked. The light incident on the first light homogenizing plate 4 will be split into three parts, one part of which will be emitted in the same direction as the incident direction, and the other parts will be deflected to the left and right and irradiate under the photovoltaic panel 3 after passing through the light-transmitting surface 42 of the first light homogenizing plate, respectively, so as to realize uniform illumination.

As shown in FIG. 8, when the light is directly incident on the second light homogenizing plate, a part of the light is emitted in the same direction as the incident direction, and the other part of the light will be deflected and irradiate under the photovoltaic panel 3 on the north side after passing through the light-transmitting surface 52 of the second light homogenizing plate, so as to realize uniform illumination.

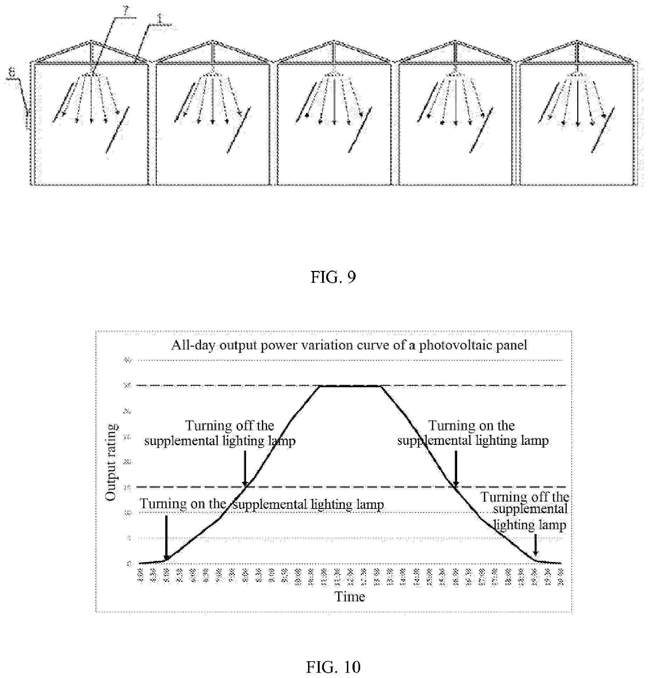

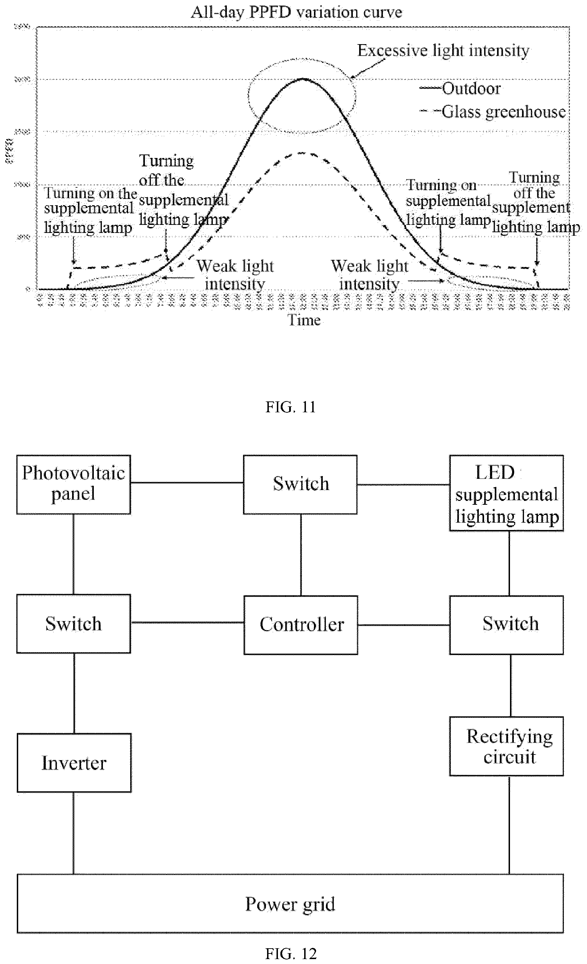

As shown in FIG. 9 to FIG. 12, an LED supplemental lighting lamp 7 and a photosynthetic photon flux density sensor are provided inside the glass greenhouse. A controller 8 is provided on the outer side of the glass side wall of the glass greenhouse. An output end of the photovoltaic panel is connected to a power grid through an inverter. An input end of the LED supplemental lighting lamp 7 is connected to the output end of the power grid through a rectifier circuit. The output end of the photovoltaic panel 3 is connected to the input end of the controller, and the input end of the LED supplemental lighting lamp 7 is connected to the output end of the controller 8 and the output end of the photovoltaic panel. The operation method of the glass greenhouse is as follows:

(1) obtaining a PPFD value by using a photosynthetic photon flux density sensor in the glass greenhouse and transmitting the PPFD value to a controller;
(2) when the PPFD value is higher than 200 $\mu$mol/m²s, inputting all the electricity generated by a photovoltaic panel into a power grid; when the PPFD value is lower than 200 $\mu$mol/m²s, 200 $\mu$mol/m²s is the optimal value set by the system, which can be adjusted according to the variety of crops and the planting season. When the electricity generated by the photovoltaic panel is sufficient to drive the LED supplemental lighting lamp, the controller controls the power grid to power the LED supplemental lighting lamp.

Specifically, the photovoltaic panel 3 can be used to generate electricity and supply power, which can increase the light intensity suitable for crops to absorb in the glass greenhouse by more than 100%. The photovoltaic panel can also be connected to the power grid for power supply in rainy days, so as to ensure the growth needs of crops in the glass greenhouse. For plant growth, when the photosynthetic photon flux density (PPFD) is above 200 $\mu$mol/m²s, better growth can be achieved. In the course of a day, when it is at noon, the PPFD value on the agricultural land is the strongest, far exceeding the light saturation point of plant photosynthesis. If it is directly incident, the plant photosynthesis will be weakened. Therefore, after the light at noon undergoes the shading treatment of the photovoltaic panel 3 and the light homogenizing treatment of the first light homogenizing plate 4 and the second light homogenizing plate 5, the PPFD in the photovoltaic glass greenhouse is weakened, and the photosynthetic rate of plants is improved. When the power generation of the photovoltaic panels 3 on one mu of land is 35 KW, the controller 8 inputs all the power generated by the photovoltaic panels 3 into the power grid. During the period when the light intensity decreases in a day, the PPFD value in the photovoltaic glass greenhouse is weak. When the power generation of the photovoltaic panel 3 on a mu of land is less than 15 KW, the controller 8 directly powers the LED supplemental lighting lamp 7 by the direct current generated by the photovoltaic panel 3 to illuminate the plants in the facility, so as to improve the PPFD value in the photovoltaic glass greenhouse, thereby improving the photosynthesis efficiency of the plants, avoiding the energy waste generated in the process of storage or voltage conversion, and improving the utilization efficiency of the electric energy. At the same time, because the planted plants have different light requirements in different growth stages and different types of plants have the difference between long day and short day, the total lighting duration of the LED supplemental lighting lamp 7 will be adjusted according to the planted plants and their different growth stages. Therefore, under the action of the photovoltaic panel 3, the first light homogenizing plate 4, the second light homogenizing plate 5, the LED supplemental lighting lamp 7 and the controller 8, the power generation is realized, and the growth of plants in the photovoltaic glass greenhouse is promoted through the peak-cutting and valley-filling regulation method for all-day light environment.

In the whole year, due to the weak light intensity in winter, the controller 8 directly powers the LED supplemental lighting lamp 7 with the electric energy generated by the photovoltaic panel 3, thus doubling the photosynthesis in the glass greenhouse, and further greatly improving the yield and quality of vegetables in the glass greenhouse before and after the traditional Spring Festival in China. In spring, autumn, summer and other periods with strong light intensity, the peak-cutting and valley-filling regulation method is used to control the LED supplemental lighting lamp 7, which brings stable income to farmers.

Because the structure of the glass greenhouse itself can basically support the photovoltaic panel 3, the first light homogenizing plate 4 and the second light homogenizing plate 5, after installing photovoltaic plates, the cost of photovoltaic power generation is actually lower than the cost of installing photovoltaic panels alone, and the crop yield in each greenhouse can be increased by more than 20% in winter.

According to the production cost estimation of the existing photovoltaic panels 3, the first light homogenizing plates 4 and the second light homogenizing plates 5, the photovoltaic power generation cost in the photovoltaic glass greenhouse of this embodiment can be significantly lower than the cost of the single photovoltaic system in the prior art. In addition, the present disclosure makes full use of the convenient conditions that the glass greenhouse is connected to the power grid, and realizes the intelligent regulation of crop illumination in the glass greenhouse by installing the LED supplemental lighting lamp 7. Therefore, along with the photovoltaic power generation, crops can also produce better economic benefits.

The above embodiments only express multiple embodiments of the present disclosure, which have been described specifically in detail, but cannot be understood as limiting the patent scope of the present disclosure. It should be pointed out that for those skilled in the art, a number of variations and improvements can be made without departing from the concept of the present disclosure, which fall within the scope of protection of the present disclosure.

**Claims**

1. An intelligent photovoltaic glass greenhouse, **characterized in that** the intelligent photovoltaic glass greenhouse comprises a plurality of groups of greenhouse units arranged in parallel in a north-south direction, wherein each of the greenhouse units comprises a main frame, equilateral obtuse roof frames, photovoltaic panels, first light homogenizing plates, second light homogenizing plates and glass side walls, the equilateral obtuse roof frames are fixed on the main frame, the roof frames of the plurality of groups of greenhouse units form a structure of a W shape, the glass side walls are provided around the main frame and not at joints of adjacent greenhouse units, a plurality of groups of the photovoltaic panels and the first light homogenizing plates are provided in turn in an east-west direction on south-facing roof frames of the roof frames, a group of first light homogenizing plates is arranged between every two groups of photovoltaic panels to form a group of the plurality of groups of the photovoltaic panels and the first light homogenizing plates, and the second light homogenizing plates are laid throughout north-facing roof frames of the roof frames.

2. The intelligent photovoltaic glass greenhouse according to claim 1, **characterized in that** waterproof sealing layers are provided between adjacent second light homogenizing plates and between the first light homogenizing plate and the photovoltaic panel.

3. The intelligent photovoltaic glass greenhouse according to claim 1, **characterized in that** the first light homogenizing plates and the second light homogenizing plates are made of glass with high transmittance, light-receiving surfaces of the first light homogenizing plates and light-receiving surfaces of the second light homogenizing plates are smooth planes, and light-transmitting surfaces of the first light homogenizing plates and light-transmitting surfaces of the second light homogenizing plates are fine Fresnel lens structures.

4. The intelligent photovoltaic glass greenhouse according to claim 1, **characterized in that** the fine Fresnel lens structures of the light-transmitting surfaces of the first light homogenizing plates consist of trapezoidal convex structures arranged in turn, and are configured for homogenizing incident light toward east and west directions of the greenhouse.

5. The intelligent photovoltaic glass greenhouse according to claim 4, **characterized in that** the trapezoidal convex structure of the light-transmitting surface of the first light homogenizing plate comprises a hypotenuse angle, an upper bottom and a lower bottom, wherein a width of the upper bottom is half of a width of the lower bottom, and specific expression formula of the hypotenuse angle $\alpha_1$ and the width of the upper bottom $a$ of a structural unit of the first light homogenizing plate are:

$$\alpha_1 = \frac{n_0 * \cos\left(\tan^{-1}\dfrac{2 * H}{k_1 * L_1}\right)}{\sqrt{n_1^2 - 2 * n_1 * n_0 * \sin\left(\tan^{-1}\dfrac{2 * h_1}{k_1 * L_1}\right) + n_0^2}}$$

$$a = \frac{h_1}{\tan(\alpha_1)} * \frac{1}{2 * k_1}$$

wherein $\alpha_1$ is the hypotenuse angle of the structural unit of the light-transmitting surface of the first light homogenizing plate, $a$ is the width of the upper bottom of the trapezoid of the structural unit of the light-transmitting surface of the I-shaped light homogenizing plate, $n_1$ is a refractive index of the first light homogenizing plate, $n_0$ is a refractive index of air, $L_1$ is a width of the first light homogenizing plate, H is a mounting height of the first light homogenizing plate, $h_1$ is a groove depth of the structural unit of the light-transmitting surface of the first light homogenizing plate, and $k_1$ is an area ratio of the first light homogenizing plate to the photovoltaic panel.

6. The intelligent photovoltaic glass greenhouse according to claim 5, **characterized in that** a number of the trapezoidal convex structures of the first light homogenizing plate is $N_1$, and specific expression formula of $N_1$ is:

$$N_1 = \frac{L_1}{\left(\dfrac{2 * h_1}{\tan(\alpha_1)} + 2 * a\right)}$$

wherein $\alpha_1$ is the hypotenuse angle of the structural unit of the light-transmitting surface of the first light homogenizing plate, $a$ is the width of the upper bottom of the trapezoid of the structural unit of the light-transmitting surface of the I-shaped light homogenizing plate, $L_1$ is the width of the first light homogenizing plate, $h_1$ is the groove depth of the structural unit of the light-transmitting surface of the first light homogenizing plate.

7. The intelligent photovoltaic glass greenhouse according to claim 1, **characterized in that** the fine Fresnel lens structures of the light-transmitting surfaces of the second light homogenizing plates consist of a plurality of groups of saw teeth with different sizes arranged in turn, and are configured for homogenizing incident light toward south and north directions of the greenhouse.

8. The intelligent photovoltaic glass greenhouse according to claim 7, **characterized in that** the saw teeth in the light-transmitting surface of the second light homogenizing plate comprise a first saw tooth and a second saw tooth, and specific expression formulas of a hypotenuse angle of the first saw tooth and a hypotenuse angle of the second saw tooth are:

$$\theta_2 = \tan^{-1}\frac{H}{L_2 * \cos(\theta_0) + tan(\theta_0) * (H + L_2 * \sin(\theta_0))}$$

$$\varphi_2 = \sin^{-1}\left(\frac{n_0 * \sin(\theta_0 + \varphi_0)}{n_1}\right)$$

$$\theta_1 = \sin^{-1}\frac{n_0 * \cos(\theta_0 - \theta_2) - n_1 * \sin(\varphi_2)}{\sqrt{n_0{}^2 + n_1{}^2 - 2 * n_0 * n_1 * \sin(\theta_0 - \theta_2 + \varphi_2)}}$$

$$\theta_2{}' = \tan^{-1}\frac{H}{L_2 * \cos(\theta_0) + \frac{1}{2} * \tan(\theta_0) * (H + L_2 * \sin(\theta_0))}$$

$$\theta_1{}' = \sin^{-1}\frac{n_0 * \cos\left(\theta_0 - \theta_2{}'\right) - n_1 * \sin(\varphi_2)}{\sqrt{n_0{}^2 + n_1{}^2 - 2 * n_0 * n_1 * \sin\left(\theta_0 - \theta_2{}' + \varphi_2\right)}}$$

wherein $\theta_0$ is an inclination angle of the second light homogenizing plate with respect to the ground, $\theta_1$ is the hypotenuse angle of the first saw tooth of a structural unit of the light-transmitting surface of the second light homogenizing plate, $\theta_1{}'$ is the hypotenuse angle of the second saw tooth of the structural unit of the light-transmitting surface of the second light homogenizing plate, $\theta_2$ is a first included angle between the sun rays emitted from the light-transmitting surface of the second light homogenizing plate and the ground, $\theta_2{}'$ is a second included angle between the sun rays emitted from the light-transmitting surface of the second light homogenizing plate and the ground, $\varphi_0$ is a height angle between the sun rays and the ground, $n_0$ is a refractive index of air, and $n_1$ is a refractive index of the second light homogenizing plate; according to the specific expression formulas of the hypotenuse angle of the first saw tooth and the hypotenuse angle of the second saw tooth, the hypotenuse angle $\theta_1$ of the saw teeth in the light-transmitting surface of the second light homogenizing plate is obtained, wherein $H$ is a mounting height of the second light homogenizing plate, $L_2$ is a length of the second light homogenizing plate, and a length of the photovoltaic panel is the same as that of the second light homogenizing plate.

9.  The intelligent photovoltaic glass greenhouse according to claim 8, **characterized in that** a number of the plurality of groups of the fine Fresnel lens structures of the second light homogenizing plate is $N_2$, and specific expression formula of $N_2$ is:

$$N_2 = \frac{L_2}{1.2 * \left(\frac{4}{\sin(2\theta_1)} + \frac{2}{\sin\left(2\theta_1{}'\right)}\right) * h_2}$$

wherein $L_2$ is the length of the second light homogenizing plate, $\theta_0$ is the inclination angle of the second light homogenizing plate with respect to the ground, $\theta_1$ is the hypotenuse angle of the first saw tooth of the structural unit of the light-transmitting surface of the second light homogenizing plate, $\theta_1{}'$ is the hypotenuse angle of the second saw tooth of the structural unit of the light-transmitting surface of the second light homogenizing plate, $h_2$ is a groove depth of the structural unit of the light-transmitting surface of the second light homogenizing plate.

10. The intelligent photovoltaic glass greenhouse according to claim 1, **characterized in that** a thickness of the first light homogenizing plate is the same as that of the second light homogenizing plate, and is in a range of 1 mm to 3 mm.

11. The intelligent photovoltaic glass greenhouse according to claim 1, **characterized in that** an LED supplemental lighting lamp and a photosynthetic photon flux density sensor are provided inside the glass greenhouse, a controller is provided on an outer side of one of the glass side walls of the glass greenhouse, an output end of the photovoltaic panel is connected to a power grid through an inverter, an input end of the LED supplemental lighting lamp is connected to an output end of the power grid through a rectifier circuit, the output end of the photovoltaic panel is connected to an input end of the controller, and the input end of the LED supplemental lighting lamp is connected to an output end of the controller and the output end of the photovoltaic panel.

12. An operation method carried out by the intelligent photovoltaic glass greenhouse according to of claim 12, **characterized in that** the operation method comprises the following steps:

(1) obtaining a PPFD value by using a photosynthetic photon flux density sensor in the glass greenhouse and transmitting the PPFD value to a controller;
(2) when the PPFD value is higher than a set value, inputting all electricity generated by a photovoltaic panel into a power grid; when the PPFD value is lower than the set value and the electricity generated by the photovoltaic panels is sufficient to drive the LED supplemental lighting lamp, using the electricity generated by the photovoltaic panels directly to drive the LED supplemental lighting lamp; and when the electricity generated by the photovoltaic panels is insufficient to drive the LED supplemental lighting lamp, the controller controls the power grid to drive the LED supplemental lighting lamp.

13. The operation method according to claim 12, **characterized in that** the set value is 200 $\mu$mol/m$^2$s.

14. An application of the intelligent photovoltaic glass greenhouse according to any one of claims 1 to 11 in greenhouse for planting in arid, water-deficient and barren areas.

FIG. 1

FIG. 2

FIG. 3

FIG. 4

FIG. 5

FIG. 6

FIG. 7

FIG. 8

FIG. 9

All-day output power variation curve of a photovoltaic panel

Turning off the
supplemental lighting lamp

Turning on the
supplemental lighting lamp

Turning on the supplemental lighting lamp

Turning off the
supplemental
lighting lamp

Output rating

Time

FIG. 10

All-day PPFD variation curve

Excessive light intensity

—Outdoor
- - -Glass greenhouse

Turning off the supplemental lighting lamp

Turning on the supplemental lighting lamp

Turning on supplemental lighting lamp

Turning off the supplement lighting lamp

Weak light intensity

Weak light intensity

Time

FIG. 11

FIG. 12

## INTERNATIONAL SEARCH REPORT

| | International application No. |
|---|---|
| | **PCT/CN2022/138622** |

| **A.** | **CLASSIFICATION OF SUBJECT MATTER** |
|---|---|
| | A01G9/14(2006.01)i;A01G9/24(2006.01)i;A01G9/26(2006.01)i;A01G7/04(2006.01)i |

According to International Patent Classification (IPC) or to both national classification and IPC

| **B.** | **FIELDS SEARCHED** |
|---|---|

Minimum documentation searched (classification system followed by classification symbols)

IPC:A01G

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 中国科学技术大学, 温室, 大棚, 阳光房, 光伏, 太阳能, 匀光, 透光, 菲涅尔, 透镜, 折射, 锯齿, greenhouse, photovoltaic, fresnel, lens, homogeniz+

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| PX | CN 114303722 A (UNIVERSITY OF SCIENCE AND TECHNOLOGY OF CHINA) 12 April 2022 (2022-04-12) <br> claims 1-14 | | 1-14 |
| X | CN 213153144 U (HEJIANG HONGLIAN AGRICULTURE CO., LTD.) 11 May 2021 (2021-05-11) <br> description, paragraphs [0033]-[0054], and figures 1-8 | | 1-4, 7, 10 |
| Y | CN 213153144 U (HEJIANG HONGLIAN AGRICULTURE CO., LTD.) 11 May 2021 (2021-05-11) <br> description, paragraphs [0033]-[0054], and figures 1-8 | | 11-14 |
| Y | CN 108024413 A (SHANGHAI YAMING LIGHTING CO., LTD. et al.) 11 May 2018 (2018-05-11) <br> description, paragraphs [0115]-[0125], and figures 1-6 | | 11-14 |
| A | CN 102013445 A (CHANGZHOU TRINA SOLAR CO., LTD.) 13 April 2011 (2011-04-13) <br> entire document | | 1-14 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **24 February 2023** | **07 March 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/138622**

**C.    DOCUMENTS CONSIDERED TO BE RELEVANT**

| Category* | Citation of document, with indication, where appropriate, of the relevant passages | Relevant to claim No. |
|---|---|---|
| A | CN 112511100 A (BEIJING DIKE NEW TECHNOLOGY RESEARCH INSTITUTE (LIMITED PARTNERSHIP)) 16 March 2021 (2021-03-16) <br> entire document | 1-14 |
| A | EP 2476305 A2 (BODE PROJECT-EN INGENIEURSBUREAU B.V.) 18 July 2012 (2012-07-18) <br> entire document | 1-14 |

Form PCT/ISA/210 (second sheet) (July 2022)

INTERNATIONAL SEARCH REPORT

Information on patent family members

International application No.

**PCT/CN2022/138622**

| Patent document cited in search report | | | Publication date (day/month/year) | Patent family member(s) | | | Publication date (day/month/year) |
|---|---|---|---|---|---|---|---|
| CN | 114303722 | A | 12 April 2022 | CN | 114303722 | B | 30 August 2022 |
| CN | 213153144 | U | 11 May 2021 | None | | | |
| CN | 108024413 | A | 11 May 2018 | CN | 108024413 | B | 16 October 2020 |
| CN | 102013445 | A | 13 April 2011 | CN | 102013445 | B | 04 September 2013 |
| CN | 112511100 | A | 16 March 2021 | None | | | |
| EP | 2476305 | A2 | 18 July 2012 | NL | 2007899 | C2 | 19 July 2012 |
| | | | | NL | 2007901 | C2 | 19 July 2012 |
| | | | | EP | 2476305 | A3 | 01 October 2014 |
| | | | | EP | 2476305 | B1 | 23 August 2017 |
| | | | | NL | 2007898 | C2 | 19 July 2012 |
| | | | | NL | 2007900 | C2 | 19 July 2012 |
| | | | | NL | 2006020 | C2 | 19 July 2012 |
| | | | | NL | 2007897 | C2 | 19 July 2012 |

Form PCT/ISA/210 (patent family annex) (July 2022)

**EP 4 449 856 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 209218747 U
- CN 213306498 U